(19) Europäisches Patentamt / European Patent Office / Office européen des brevets

(11) **EP 4 477 410 A1**

(12) **EUROPEAN PATENT APPLICATION**
published in accordance with Art. 153(4) EPC

(43) Date of publication:
**18.12.2024 Bulletin 2024/51**

(21) Application number: 23778783.3

(22) Date of filing: **24.01.2023**

(51) International Patent Classification (IPC):
$B32B\ 15/08$ (2006.01)   $B05D\ 5/00$ (2006.01)
$B05D\ 7/14$ (2006.01)   $B05D\ 7/24$ (2006.01)
$C09D\ 7/63$ (2018.01)   $C09D\ 201/00$ (2006.01)
$C23C\ 26/00$ (2006.01)

(52) Cooperative Patent Classification (CPC):
B05D 5/00; B05D 7/14; B05D 7/24; B32B 15/08;
C09D 7/63; C09D 201/00; C23C 26/00

(86) International application number:
**PCT/JP2023/002151**

(87) International publication number:
**WO 2023/188745 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.03.2022 JP 2022054830**

(71) Applicant: JFE Steel Corporation
Tokyo 100-0011 (JP)

(72) Inventors:
• **AOYAMA Tomohiro**
  **Tokyo 100-0011 (JP)**
• **FURUYA Shinichi**
  **Tokyo 100-0011 (JP)**
• **MATSUDA Takeshi**
  **Tokyo 100-0011 (JP)**
• **NAKAMICHI Haruo**
  **Tokyo 100-0011 (JP)**

(74) Representative: **Hoffmann Eitle
Patent- und Rechtsanwälte PartmbB
Arabellastraße 30
81925 München (DE)**

(54) **STEEL SHEET AND METHOD FOR MANUFACTURING SAME**

(57)  An object is to provide a steel sheet having a lubrication film that is to be subjected to complex forming in which press forming is difficult, the steel sheet having low sliding resistance in a portion at risk of cracking when press forming is performed and excellent press formability in a portion in which die galling is considered to occur due to high contact pressure, and a method for manufacturing the steel sheet.

The steel sheet has an organic resin coating film which has an indentation reduced Young's modulus of 20 GPa or higher and 50 GPa or lower and an indentation hardness of 0.5 GPa or higher and 1.5 GPa or lower or which has an indentation reduced Young's modulus of 10 GPa or higher and less than 20 GPa and an indentation hardness of 0.2 GPa or higher and 0.5 GPa or lower and which has a coating weight per side of 0.2 g/m² or more and 2.0 g/m² or less on a surface thereof.

EP 4 477 410 A1

## Description

Technical Field

The present invention relates to a steel sheet excellent in terms of slidability when press forming is performed and a method for manufacturing the steel sheet. In particular, the present invention relates to a steel sheet which has a lubrication film that is excellent in terms of formability even when intense drawing is performed and a method for manufacturing the steel sheet.

Background Art

Cold rolled steel sheets and hot rolled steel sheets, which have a wide range of industrial applications in fields including automotive body applications, are generally subjected to press forming when used in such applications. Nowadays, since there are demands for integrated parts, which are intended to reduce the number of processes, and improvement in design effect, it is necessary to realize complex forming at a higher level. In the case where an attempt is made to realize complex press forming at a higher level, there is a risk of significant negative effects on the productivity of automobiles, such as steel sheet fracture caused by the degree of forming which exceeds the capacity of the steel sheet, die galling occurring when continuous press forming is performed, or the like. Therefore, it is necessary to improve the press formability of the steel sheets.

Examples of a method for improving the press formability of cold rolled steel sheets and hot rolled steel sheets include a method involving surface treatment of a die. Although this method is widely used, in the case of this method, it is not possible to adjust the die after surface treatment has been performed. In addition, there is also a problem of high cost. Therefore, there is a strong demand for improving the press formability of a steel sheet itself.

Examples of a method for improving press formability without performing surface treatment on a die include a method utilizing high-viscosity lubricant. However, in the case of this method, there may be a case of poor degreasing after press forming, and there is a risk of a deterioration in paintability.

Therefore, as a technique for realizing press forming without utilizing the surface treatment of a die or high-viscosity lubricant, investigations are being conducted regarding various kinds of steel sheets having a lubrication-treated surface.

Patent Literature 1 describes a technique in which a lubrication film obtained by adding synthesized resin powder to an acrylic resin coating film is formed on the surface of a galvanized steel sheet.

Patent Literature 2 describes a technique in which a lubrication film having lithium silicate as the constituent of a coating film and a wax and a metallic soap added as lubricants to the coating film is formed on the surface of a steel sheet.

Patent Literature 3 describes a metal product having a lubrication-treated surface coated with a film which is formed by adding a lubricant to a polyurethane resin and which has a thickness of 0.5 um to 5 um and having excellent press formability.

Patent Literature 4 describes a technique in which an alkali-soluble organic coating film obtained by adding a lubricant to an epoxy resin is formed on the surface of a steel sheet.

Citation List

Patent Literature

PTL 1: Japanese Unexamined Patent Application Publication No. 9-170059
PTL 2: Japanese Unexamined Patent Application Publication No. 2002-307613
PTL 3: Japanese Unexamined Patent Application Publication No. 2000-309747
PTL 4: Japanese Unexamined Patent Application Publication No. 2000-167981

Summary of Invention

Technical Problem

However, in the case of Patent Literature 1 to Patent Literature 4, although lubrication performance was achieved due to the lubrication effect of the added lubricants or the like, press formability was not always sufficient when complex forming was performed.

The present invention has been completed in view of the situation described above, and an object of the present invention is to provide a steel sheet that is to be subjected to complex forming in which press forming is difficult, the steel sheet having low sliding resistance in a portion at risk of cracking when press forming is performed and excellent press formability in a portion in which die galling is considered to occur due to high contact pressure, and to provide a method for manufacturing the steel sheet.

In addition, in the case where the steel sheet is used as an automobile steel sheet, the steel sheet is also required to have sufficient film removability in an alkaline degreasing process in a painting process and to further have excellent weldability. In the case of such an application, desirably the steel sheet further has good film removability and weldability.

Solution to Problem

To solve the problems described above, the present inventors diligently conducted investigations. As a result, the inventors found that it is possible to solve the problems described above by forming an organic coating film on the surface of a steel sheet to improve press formability. The organic coating film has an indentation hardness of 0.5 GPa or higher and 1.5 GPa or lower in the case where the coating film has an indentation reduced Young's modulus of 20 GPa or higher and 50 GPa or lower or the coating film has an indentation hardness of 0.2 GPa or higher and 0.5 GPa or lower in the case where the coating film has an indentation reduced Young's modulus of 10 GPa or higher and lower than 20 GPa.

Moreover, it was also found that there is a significant improvement in lubrication performance in the case where a combination of a specified organic coating film and a specified wax is selected.

The present invention has been completed on the basis of the knowledge described above, and the subject matter of the present invention is as follows.

[1] A steel sheet having an organic resin coating film which has an indentation reduced Young's modulus of 20 GPa or higher and 50 GPa or lower and an indentation hardness of 0.5 GPa or higher and 1.5 GPa or lower and which has a coating weight per side after drying of 0.2 g/m$^2$ or more and 2.0 g/m$^2$ or less on at least one surface thereof.

[2] A steel sheet having an organic resin coating film which has an indentation reduced Young's modulus of 10 GPa or higher and less than 20 GPa and an indentation hardness of 0.2 GPa or higher and 0.5 GPa or lower and which has a coating weight per side after drying of 0.2 g/m$^2$ or more and 2.0 g/m$^2$ or less on at least one surface thereof.

[3] The steel sheet according to item [1] or [2], in which the organic resin coating film contains one, two, or more selected from an acrylic resin, a urethane resin, a phenol resin, an epoxy resin, and a mixture thereof.

[4] The steel sheet according to any one of items [1] to [3], in which the organic resin coating film contains a wax in an amount of 50 mass% or less with respect to 100 mass% of resin constituents.

[5] The steel sheet according to item [4], in which the wax is a hydrocarbon-based wax.

[6] The steel sheet according to item [4] or [5], in which an average particle diameter of the wax is 0.01 um or more and 4 um or less.

[7] A method for manufacturing the steel sheet according to any one of items [1] to [6], the method including: applying, to the steel sheet, a solution which is prepared by dissolving or dispersing an organic resin in an aqueous solvent or a solution which is prepared by adding a wax to the organic resin, and drying the applied solution by heating to form a lubrication film having a coating weight per side after drying of 0.2 g/m$^2$ or more and 2.0 g/m$^2$ or less on the steel sheet.

In the present invention, the meaning of the term "steel sheet" includes a cold rolled steel sheet and a hot rolled steel sheet.

Advantageous Effects of Invention

According to the present invention, it is possible to obtain a steel sheet excellent in terms of press formability. Since there is a marked decrease in the friction coefficient between the steel sheet and a die or the like, it is possible to provide excellent press formability stably to a steel sheet having comparatively low strength, which is subjected to complex forming. In addition, in the case of a high strength steel sheet where there is an increase in the contact pressure when press forming is performed, it is possible to obtain a steel sheet having low sliding resistance in a portion at risk of cracking when press forming is performed and excellent press formability in a portion in which die galling is considered to occur due to high contact pressure. Moreover, it is possible to achieve a condition in which there is no impediment to subsequent processes such as a welding process, a degreasing process, a chemical conversion process, a painting process, and the like.

In the description above, the expression "high strength" denotes the assumption that tensile strength (TS) is 440 MPa or higher, and the expression "comparatively low strength" denotes the assumption that TS is lower than 440 MPa.

Brief Description of Drawings

[Fig. 1] Fig. 1 is a schematic front view illustrating a friction coefficient measurement apparatus.
[Fig. 2] Fig. 2 is a schematic perspective view illustrating the shape and dimensions of the bead in Fig. 1. Description of Embodiments

Hereafter, embodiments of the present invention will be described.

First, the indentation reduced Young's modulus and indentation hardness of the coating film after drying will be described.

The term "indentation reduced Young's modulus of a coating film" denotes a physical property value which is determined, when a coating film sample is indented by an indenter and then unloaded, from the line tangent to a load-displacement curve at the maximum load point and the projected contact area of the indenter. It indicates a level of force with which the coating film pushes back when a displacement is applied to the coating film. Although the indentation reduced Young's modulus of an organic resin coating film varies in accordance with the constituents, thickness, condensation degree, and the like of the coating film, the indentation reduced Young's modulus is 8 GPa to 40 GPa in general cases.

It is possible to determine the indentation reduced Young's modulus of a coating film by using, for example, a nanoindenter or the like.

In the case of an organic resin coating film after drying having an indentation reduced Young's modulus of 20 GPa or higher and 50 GPa or lower and an indentation hardness of 0.5 GPa or higher and 1.5 GPa or lower, since the deformation amount of the constituents of the organic resin coating film which enters the interface between the steel sheet and the die is small, the steel sheet has low sliding resistance in a portion at risk of cracking when press forming is performed and has excellent press formability in a portion in which die galling is considered to occur due to high contact pressure.

In addition, also in the case of an organic resin coating film after drying having an indentation reduced Young's modulus of 10 GPa or higher and less than 20 GPa, when the indentation hardness is 0.2 GPa or higher and 0.5 GPa or lower, since shear deformation tends to occur in the constituents of the organic resin coating film which enters the interface between the steel sheet and the die, the steel sheet has low sliding resistance in a portion at risk of cracking when press forming is performed and has excellent press formability in a portion in which die galling is considered to occur due to high contact pressure.

The term "indentation hardness of a coating film" denotes hardness which is determined, when a coating film sample is indented by an indenter and then unloaded, by dividing the maximum load point by the projected contact area of the indenter, and it is possible to determine such indentation hardness by using, for example, a nanoindenter or the like.

The coating weight after drying of the organic resin coating film is set to be 0.2 $g/m^2$ or more and 2.0 $g/m^2$ or less. It is not possible to achieve sufficient press formability in the case where the coating weight after drying of the organic resin coating film is less than 0.2 $g/m^2$, and there may be a deterioration in weldability and film removability in the case where such a coating weight is more than 2.0 $g/m^2$.

It is preferable that the organic resin coating film contain one, two, or more selected from an acrylic resin, a urethane resin, a phenol resin, an epoxy resin, and a mixture thereof. With this, the die and the steel sheet are inhibited from coming into direct contact with each other when press forming is performed and lubrication performance is achieved. In addition, since there is high affinity between the organic resin and a wax, when a hydrocarbon-based wax is added to the organic resin coating film, further improved lubrication performance is achieved due to a uniform mixture of the organic resin and the wax being formed when sliding occurs.

It is preferable that the organic resin coating film contains the wax in an amount of 50 mass% or less with respect to 100 mass% of resin constituents, because this results in further improved lubrication performance. In the case where the wax content is 50 mass% or more with respect to 100 mass% of resin constituents, since there is a decrease in the indentation reduced Young's modulus and indentation hardness, there may be a case where it is not possible to achieve sufficient press formability. In addition, in the case where the steel sheet is used as an automobile steel sheet, there may be a case where it is not possible to achieve sufficient degreasing capability in an alkaline degreasing process in a painting process, and, even in the case where an alkali-soluble organic resin is used, there may be a deterioration in paintability due to a residual coating film because the coating film is not sufficiently removed in the alkaline degreasing process.

The term "proportion of a wax in an organic resin coating film" denotes the ratio of the mass of the solid wax in the organic resin coating film with respect to the sum of the mass of the solid organic resin in the organic resin coating film and the mass of the solid wax in the organic resin coating film.

Regarding a specific method for determining the mass fraction of the wax, a test specimen of a steel sheet for which the coating weight of each of the organic resin and the wax is known is prepared, the infrared absorption spectrum of the test specimen is measured by using a FT-IR measuring apparatus, and the calibration curve for the coating weight of each of the organic resin and the wax is produced from the relevant peak intensity. Subsequently, the infrared absorption spectrum of a target steel sheet having an organic resin coating film is measured, and the coating weight of each of the organic resin and the wax is determined on the basis of the relevant calibration curve, which makes it possible to determine the mass fraction of the wax in the organic resin coating film.

It is preferable that the wax be a hydrocarbon-based wax. This is because a hydrocarbon-based wax has a comparatively high melting temperature, low viscosity, and high hardness, which makes it possible to achieve good lubrication performance. In addition, regarding the hydrocarbon-based wax, in the case of a polyolefin wax, it is possible to control the melting temperature to be 120°C or higher and 140°C or lower comparatively easily by controlling its density and molecular weight.

In the case where the melting temperature of the wax is 120°C or higher and 140°C or lower, it is possible to achieve an excellent lubrication effect, because it is possible for the wax to deliver self-lubrication performance, and because it is possible for the constituents of the lubrication film, formed of a mixture of the organic resin and the wax which is in a semi-molten state due to sliding when press forming is performed, to cover the surface of the die and it is thus possible to inhibit the die and the steel sheet from coming into direct contact with each other. In the case where such a melting temperature is lower than 120°C, since the wax is completely melted due to frictional heat generated by sliding when press forming is performed, it is not possible for the wax to realize a sufficient lubrication effect, and it is not possible for the constituents of the lubrication film to realize the effect of covering the die described above either. In addition, in the case where such a melting temperature is higher than 140°C, since the wax is not melted when sliding is performed, it is not possible to realize a sufficient lubrication effect, and it is not possible to realize the effect of covering the die described above either.

It is considered that, in the case where the melting temperature of the wax is 120°C or higher and 140°C or lower, since the wax in the organic resin coating film efficiently adheres to the die in a sliding state when press forming is performed, the wax is less likely to be detached, which results in a high lubrication effect. In the case where such a melting temperature is lower than 120°C, even in the case where the organic resin coating film adheres to the die, since there is a weak adhesion force, the coating film is more likely to be detached when sliding is performed. In the case where such a melting temperature is higher than 140°C, the organic resin coating film is less likely to adhere to the die. Moreover, it is preferable that such a melting temperature be 125°C or higher and 135°C or lower.

Here, the term "melting temperature" with respect to the wax denotes the melting temperature measured in accordance with JIS K 7121:1987 "Testing Methods for Transition Temperatures of Plastics".

Regarding the polyolefin wax, it is preferable that a polyethylene wax be used, because this makes it possible to realize the highest lubrication effect.

It is preferable that the average particle diameter of the wax be 4 um or less. In the case where the average particle diameter of the wax is more than 4 um, since the wax is less likely to be mixed with the organic resin when sliding is performed, it is not possible to realize the above-described effect of covering the die, which results in sufficient lubrication performance not being achieved. It is more preferable that the average particle diameter of the wax be 1.5 um or less, even more preferably 0.5 um or less, or even much more preferably 0.3 um or less.

It is preferable that the average particle diameter of the wax be 0.01 um or more. In the case where the average particle diameter of the wax is less than 0.01 um, since the wax is more likely to be dissolved in a lubricant when sliding is performed, there may be a case where it is not possible to realize a sufficient effect of improving lubrication performance. In addition, in the case where the average particle diameter of the wax is less than 0.01 um, since the wax is more likely to be aggregated in a paint for forming the organic resin coating film, there is low paint stability. It is more preferable that such an average diameter be 0.03 um or more.

The term "average particle diameter of the wax" denotes the median diameter of a volume average particle diameter, which is determined by using a laser diffraction/scattering method. It is possible to obtain the average particle diameter of the wax by observing a sample which is diluted with pure water by using, for example, a laser diffraction/-scattering-type particle size distribution measuring device, that is, a Partica (registered trademark) LA-960V2 (produced by HORIBA, Ltd.).

The method for manufacturing a steel sheet according to the present invention is a method for manufacturing a steel sheet having an organic resin coating film formed of an organic resin or an organic resin containing a wax on the surface thereof. After having applied a solution, which is prepared by dissolving or dispersing an organic resin in an aqueous solvent, or a solution, which is prepared by adding a wax to the solution of the organic resin, to the surface of a steel sheet, the solution is dried. With this method, a lubrication film having a coating weight per side after drying of 0.2 g/m$^2$ or more and 2.0 g/m$^2$ or less is formed on the steel sheet. Although there is no particular limitation on the coating method, examples of the coating method include a method utilizing a roll coater or a bar coater and a method involving spraying, dipping, or brushing. The coated steel sheet may be dried by using a common method. Examples of the drying method include a method utilizing hot air, an induction heater, or an infrared heater.

To realize such a condition in which the organic resin coating film after drying has an indentation reduced Young's modulus of 20 GPa or higher and 50 GPa or lower and an indentation hardness of 0.5 GPa or higher and 1.5 GPa or lower, candidate organic resin coating films are manufactured under assumed manufacturing conditions (film coating weight, drying conditions, and the like), and the indentation reduced Young's modulus and the indentation hardness are determined for selection.

To realize such a condition in which the organic resin coating film after drying has an indentation reduced Young's modulus of 10 GPa or higher and less than 20 GPa and an indentation hardness of 0.2 GPa or higher and 0.5 GPa or lower, candidate organic resin coating films are manufactured under assumed manufacturing conditions (film coating weight, drying conditions, and the like), and the indentation reduced Young's modulus and the indentation hardness are determined for selection.

It is preferable that the maximum end-point temperature of the steel sheet when drying is performed be 60°C or higher and 150°C or lower. In the case where the maximum end-point temperature of the steel sheet when drying is performed is lower than 60°C, it takes a long time to dry the steel sheet, and there may be a deterioration in antirust capability. Moreover, since there is insufficient polymerization of the organic resin, the reduced Young's modulus becomes less than 10 GPa, which results in sufficient lubrication performance not being achieved. In the case where the maximum end-point temperature of the steel sheet when drying is performed is 150°C or higher, since the polymerization and dehydration of the organic resin progress, it is possible to achieve sufficient lubrication performance due to an increase in the reduced Young's modulus. However, there may be a deterioration in film removability. In addition, in the case where a wax having a melting temperature of 150°C or lower is contained in the organic resin coating film, since the wax is melted to be mixed with the resin, there is a decrease in the indentation reduced Young's modulus and the indentation hardness, which may result in a deterioration in press formability.

Although the present invention has been described above in accordance with the embodiments of the present invention, the present invention includes, but is not limited to, the descriptions and figures of the present embodiments, which form a part of the disclosure of the present invention. That is, other embodiments, working examples, operational techniques, and the like, which are performed on the basis of the present embodiments by, for example, those ordinarily skilled in the art are all within the scope of the present invention.

EXAMPLES

Hereafter, the present invention will be described in accordance with examples. Here, the present invention is not limited to the examples below. In addition, the organic resin coating film may also be simply referred to as "coating film".

A steel sheet having a size of 350 mm × 230 mm which was taken from a cold rolled steel sheet (TS: 270 MPa) having a thickness of 0.8 mm was used as a base material for an organic resin coating film. After the taken steel sheet had been subjected to an ultrasonic cleaning process of being immersed in a 50 vol% toluene-50 vol% ethanol solvent for 5 minutes, the cleaned steel sheet was dried by using a blower, and the dried steel sheet was subjected to a degreasing treatment utilizing an alkaline degreasing agent, that is, FINE CLEANER (registered trademark) E6403 (produced by Nihon Parkerizing Co., Ltd.). In such a treatment, after the test specimen had been immersed in a degreasing solution containing the degreasing agent having a degreasing agent concentration of 20 g/L at a temperature of 40°C for 2 minutes, the immersed test specimen was rinsed in tap water, and then dried by using a blower. After each of the paints given in Table 1 had been applied to the surface of the steel sheet prepared as described above by using a bar coater, the painted steel sheet was baked and dried by using an induction heater (IH) to manufacture a steel sheet having a lubrication organic coating film given in Table 2. Here, the temperature at which each of the samples was baked to form the coating film is given in Table 2. These samples were evaluated by using the methods described below, and the results are given in Table 2.

[Table 1]

| Paint No. | Base Resin | Wax | | | |
|---|---|---|---|---|---|
| | Type | Type | Mass% with respect to 100 mass% of Resin | Melting Temperature (°C) | Particle Diameter (μm) |
| 1 | Phenol | None | 0 | - | - |
| 2 | Phenol | Polyethylene | 10 | 110 | 0.6 |
| 3 | Phenol | Polyethylene | 20 | 110 | 0.6 |
| 4 | Phenol | Polyethylene | 50 | 110 | 0.6 |
| 5 | Phenol | Polyethylene | 60 | 110 | 0.6 |
| 6 | Phenol | Polyethylene | 20 | 132 | 0.6 |
| 7 | Phenol | Polyethylene | 20 | 110 | 0.2 |
| 8 | Phenol | Polyethylene | 20 | 110 | 1.0 |
| 9 | Phenol | Polyethylene | 20 | 110 | 4.0 |

(continued)

| Paint No. | Base Resin | Wax | | | |
|---|---|---|---|---|---|
| | Type | Type | Mass% with respect to 100 mass% of Resin | Melting Temperature (°C) | Particle Diameter (μm) |
| 10 | Phenol | Polyethylene | 20 | 110 | 10.0 |
| 11 | Phenol | Polyethylene | 20 | 135 | 0.05 |
| 12 | Phenol | Paraffin | 20 | 70 | 1.0 |
| 13 | Phenol | Fischer-Tropsch | 20 | 113 | 1.0 |
| 14 | Acrylic | None | 0 | - | - |
| 15 | Acrylic | Polyethylene | 20 | 110 | 0.6 |
| 16 | Urethane | None | 0 | - | - |
| 17 | Urethane | Polyethylene | 20 | 110 | 0.6 |
| 18 | Epoxy | None | 0 | - | - |
| 19 | Epoxy | Polyethylene | 20 | 110 | 0.6 |

[Table 2]

| Steel Sheet No. | Paint No. | Coating Weight (g/m$^2$) | Coating Film Baking Temperature (°C) | Evaluation Item | | | | | | | | |
|---|---|---|---|---|---|---|---|---|---|---|---|---|
| | | | | Mechanical Property of Coating Film | | | Slidability | | Film Removability | Weldability | Note |
| | | | | Indentation Reduced Young's Modulus (GPa) | Indentation Hardness (GPa) | Evaluation | Frictional Coefficient | Evaluation | | | |
| 1 | 1 | 0.8 | 80 | 27.8 | 0.9 | ○ | 0.110 | ○ | ○ | ○ | Example |
| 2 | 1 | 0.8 | 90 | 28.9 | 0.9 | ○ | 0.102 | ○ | ○ | ○ | Example |
| 3 | 1 | 0.8 | 120 | 32.1 | 1.1 | ○ | 0.100 | ○ | Δ | ○ | Example |
| 4 | 1 | 0.8 | 155 | 48.1 | 1.2 | ○ | 0.098 | ○ | × | ○ | Example |
| 5 | 1 | 0.8 | 55 | 9.8 | 0.3 | × | 0.173 | × | ○ | ○ | Comparative Example |
| 6 | 2 | 0.8 | 80 | 27.4 | 0.9 | ○ | 0.101 | ○ | ○ | ○ | Example |
| 7 | 3 | 0.8 | 80 | 27.1 | 0.9 | ○ | 0.083 | ○ | ○ | ○ | Example |
| 8 | 3 | 0.1 | 80 | 51.3 | 1.2 | × | 0.173 | × | ○ | ○ | Comparative Example |
| 9 | 3 | 0.2 | 80 | 42.1 | 1.0 | ○ | 0.129 | ○ | ○ | ○ | Example |
| 10 | 3 | 2.0 | 80 | 21.2 | 0.8 | ○ | 0.074 | ○ | ○ | ○ | Example |
| 11 | 3 | 3.0 | 80 | 20.9 | 0.8 | ○ | 0.060 | ○ | Δ | × | Example |
| 12 | 4 | 0.8 | 80 | 24.1 | 0.7 | ○ | 0.100 | ○ | ○ | ○ | Example |
| 13 | 5 | 0.8 | 80 | 19.3 | 0.6 | × | 0.136 | × | Δ | ○ | Comparative Example |
| 14 | 6 | 0.8 | 80 | 27.2 | 0.9 | ○ | 0.075 | ○ | ○ | ○ | Example |
| 15 | 7 | 0.8 | 80 | 27.5 | 0.9 | ○ | 0.081 | ○ | ○ | ○ | Example |
| 16 | 8 | 0.8 | 80 | 26.8 | 0.8 | ○ | 0.096 | ○ | ○ | ○ | Example |
| 17 | 9 | 0.8 | 80 | 21.1 | 0.7 | ○ | 0.128 | ○ | ○ | ○ | Example |
| 18 | 10 | 0.8 | 80 | 18.6 | 0.6 | × | 0.146 | × | ○ | ○ | Comparative Example |
| 19 | 11 | 0.8 | 80 | 27.8 | 0.9 | ○ | 0.068 | ○ | ○ | ○ | Example |

(continued)

| Steel Sheet No. | Paint No. | Coating Weight (g/m²) | Coating Film Baking Temperature (°C) | Mechanical Property of Coating Film | | | Evaluation Item | | Film Removability | Weldability | Note |
|---|---|---|---|---|---|---|---|---|---|---|---|
| | | | | Indentation Reduced Young's Modulus (GPa) | Indentation Hardness (GPa) | Evaluation | Slidability | | | | |
| | | | | | | | Frictional Coefficient | Evaluation | | | |
| 20 | 12 | 0.8 | 80 | 19.4 | 0.6 | × | 0.190 | × | ○ | ○ | Comparative Example |
| 21 | 13 | 0.8 | 80 | 26.9 | 0.8 | ○ | 0.112 | ○ | ○ | ○ | Example |
| 22 | 14 | 0.8 | 80 | 14.7 | 0.5 | ○ | 0.105 | ○ | ○ | ○ | Example |
| 23 | 14 | 0.8 | 90 | 15.2 | 0.6 | × | 0.135 | × | ○ | ○ | Comparative Example |
| 24 | 14 | 0.8 | 155 | 17.3 | 0.8 | × | 0.137 | × | × | ○ | Comparative Example |
| 25 | 14 | 0.8 | 55 | 8.7 | 0.2 | × | 0.138 | × | ○ | ○ | Comparative Example |
| 26 | 15 | 0.8 | 80 | 14.3 | 0.4 | ○ | 0.101 | ○ | ○ | ○ | Example |
| 27 | 15 | 0.8 | 90 | 14.7 | 0.5 | ○ | 0.110 | ○ | ○ | ○ | Example |
| 28 | 16 | 0.8 | 80 | 11.6 | 0.3 | ○ | 0.128 | ○ | △ | ○ | Example |
| 29 | 16 | 0.8 | 90 | 12.3 | 0.3 | ○ | 0.124 | ○ | △ | ○ | Example |
| 30 | 16 | 0.8 | 155 | 14.2 | 0.6 | × | 0.142 | × | × | ○ | Comparative Example |
| 31 | 16 | 0.8 | 55 | 8.3 | 0.1 | × | 0.182 | × | △ | ○ | Comparative Example |
| 32 | 17 | 0.8 | 80 | 10.8 | 0.3 | ○ | 0.119 | ○ | △ | ○ | Example |
| 33 | 17 | 0.8 | 90 | 11.0 | 0.4 | ○ | 0.117 | ○ | △ | ○ | Example |
| 34 | 18 | 0.8 | 80 | 14.4 | 0.6 | × | 0.159 | × | × | ○ | Comparative Example |
| 35 | 18 | 0.8 | 90 | 15.0 | 0.6 | × | 0.148 | × | × | ○ | Comparative Example |

(continued)

| Steel Sheet No. | Paint No. | Coating Weight (g/m²) | Coating Film Baking Temperature (°C) | Evaluation Item | | | | | | | | Note |
|---|---|---|---|---|---|---|---|---|---|---|---|---|
| | | | | Mechanical Property of Coating Film | | | Slidability | | Film Removability | Weldability | | |
| | | | | Indentation Reduced Young's Modulus (GPa) | Indentation Hardness (GPa) | Evaluation | Frictional Coefficient | Evaluation | | | | |
| 36 | 18 | 0.8 | 155 | 18.3 | 0.8 | × | 0.138 | × | × | ○ | | Comparative Example |
| 37 | 18 | 0.8 | 55 | 8.5 | 0.2 | × | 0.161 | × | × | ○ | | Comparative Example |
| 38 | 19 | 0.8 | 80 | 13.8 | 0.5 | ○ | 0.130 | ○ | × | ○ | | Example |
| 39 | 19 | 0.8 | 90 | 14.2 | 0.5 | ○ | 0.129 | ○ | × | ○ | | Example |
| 40 | - | None | 80 | - | - | - | 0.175 | × | - | ○ | | Comparative Example |

(1) Method for evaluating mechanical properties of coating film (indentation reduced Young's modulus and indentation hardness)

The indentation reduced Young's modulus and indentation hardness of the coating film were determined by using the following method.

A piece having a size of 10 mm square which was taken from each of the lubrication organic resin-coated steel sheets was used as a sample material. For measurement, a nanoindenter produced by HYSITRON Inc., that is, a TI Premier Multi Scale, was used. Regarding the indenter, a cube corner-type indenter made of diamond was used. In the measurement, the indenter was impressed for 5 seconds, held thereafter at the maximum load (30 $\mu$N to 150 $\mu$N) for 10 seconds, and then unloaded in 5 seconds. At each of five randomly selected positions in the vicinity of the central position of each of the sample materials, an indentation depth-load curve was taken under such measurement conditions, and the indentation reduced Young's modulus $E_r$ and the indentation hardness H were calculated by using the equations below. The average values of the indentation reduced Young's modulus and the indentation hardness of the five points were defined as the average values of the indentation reduced Young's modulus and the indentation hardness, respectively, of each of the sample materials.

[Math. 1]

$$E_r = \frac{\sqrt{\pi}}{2} \frac{1}{\sqrt{A}} \frac{dP}{dh}$$

[Math. 2]

$$H = \frac{P_{max}}{A}$$

Here, A denotes the projected contact area of the residual indentation, dP/dh denotes the line tangent to the unloading curve at the maximum load point, and $P_{max}$ denotes the maximum load.

On the basis of the average values of the indentation reduced Young's modulus and the indentation hardness of each of the samples, a case of an organic resin coating film after drying having an indentation reduced Young's modulus of 20 GPa or higher and 50 GPa or lower and an indentation hardness of 0.5 GPa or higher and 1.5 GPa or lower or a case of an organic resin coating film after drying having an indentation reduced Young's modulus of 10 GPa or higher and less than 20 GPa and an indentation hardness of 0.2 GPa or higher and 0.5 GPa or lower was judged as a case of an organic resin coating film having the mechanical properties according to the present invention and denoted by o, and other cases were judged as unsatisfactory and denoted by x.

(2) Method for evaluating press formability (slidability)

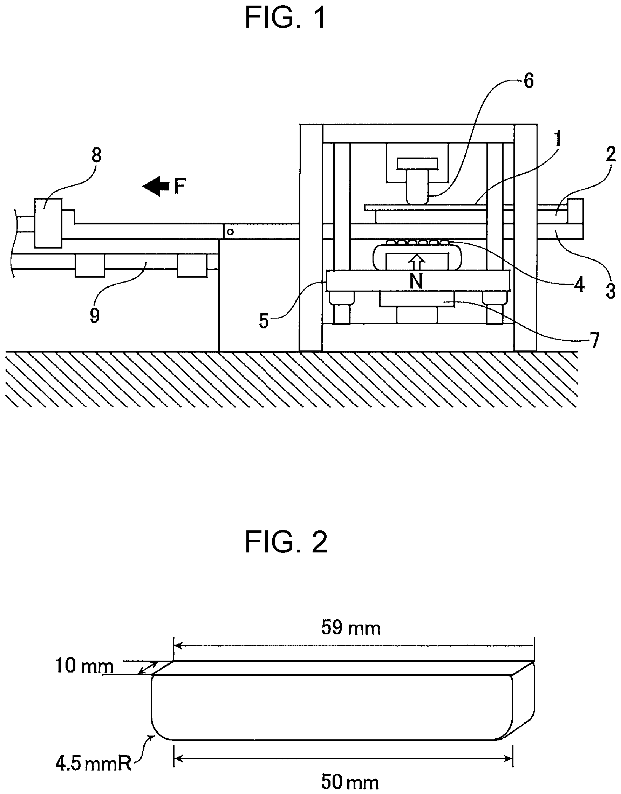

To evaluate the press formability, the friction coefficient of each of the sample materials was measured by using the method described below. Fig. 1 is a schematic front view illustrating a friction coefficient measurement apparatus. As illustrated in Fig. 1, a sample 1 for measuring the friction coefficient taken from the sample material is fixed on a sample stage 2, and the sample stage 2 is fixed on the upper surface of a slide table 3, which is horizontally movable. A slide table supporting base 5 which has rollers 4 in contact with the lower surface of the slide table 3 and which is vertically movable is placed below the lower surface of the slide table 3, and a first load cell 7 for measuring a pressing load N, which is applied to the sample 1 for measuring the friction coefficient by using a bead 6 as a result of the slide table supporting base 5 being pushed up, is fixed on the slide table supporting base 5. A second load cell 8 for measuring sliding resistance F, which is necessary to move the slide table 3 horizontally while the pressing load N described above is applied, is fixed on one end of the slide table 3. Here, as a lubricant, a wash oil for press forming, that is, PRETON (registered trademark) R352L produced by Sugimura Chemical Industrial Co., Ltd., was applied to the surface of the sample 1 when the test was performed.

Fig. 2 is a schematic perspective view illustrating the shape and dimensions of the bead used. Sliding is performed while the lower surface of the bead 6 is pressed onto the surface of the sample 1. The bead 6 in Fig. 2 has a width of 10 mm, a length in the sliding direction of the sample of 59 mm, and a curvature radius R of 4.5 mm at the bottom of each of the edges in the sliding direction, and the lower surface of the bead, onto which the sample is pressed, is a flat surface having a width of 10 mm and a length in the sliding direction of 50 mm.

The test for measuring the friction coefficient was performed by using the bead illustrated in Fig. 2 under the conditions of a pressing load N of 400 kgf and a drawing speed of the sample (the horizontal movement speed of the slide table 3) of 20 cm/min. The friction coefficient $\mu$ between the sample material and the bead was calculated by using the equation $\mu = F/N$. A case where the friction coefficient was 0.130 or less was judged as a case of good slidability and denoted by o, and a case where the friction coefficient was 0.130 or more was judged as unsatisfactory and denoted by ×.

(3) Method for evaluating film removability

To determine the film removability of the organic resin-coated steel sheet, the test specimens were first subjected to a degreasing treatment by using an alkaline degreasing agent FINE CLEANER (registered trademark) E6403 (produced by Nihon Parkerizing Co., Ltd.). In such a treatment, the test specimen was immersed for a predetermined time in a degreasing solution having a degreasing agent concentration of 20 g/L and a temperature of 40°C, washed with tap water, and then dried by using a blower. The surface carbon intensity of the test specimen which had been subjected to such a treatment was measured by using an X-ray fluorescence spectrometer, and a film removal ratio was calculated by using the following equation from the measured value of such a surface carbon intensity, a surface carbon intensity which had been measured in advance before degreasing was performed, and the surface carbon intensity of the steel sheet before the lubrication treatment was performed.

The film removability of the organic resin-coated steel sheet was evaluated in accordance with the evaluation criteria below on the basis of an immersion time for which the sample had been immersed in the alkaline degreasing solution until the film removal ratio defined as above reached 98% or higher.

<Film removal ratio>

film removal ratio (%) = [(carbon intensity before degreasing - carbon intensity after degreasing)/(carbon intensity before degreasing - carbon intensity before lubrication treatment)] × 100

<Evaluation criteria>

    o (excellent): 60 seconds or less
    △ (practicable): more than 60 seconds and 120 seconds or less
    × (poor): more than 120 seconds

(4) Method for evaluating weldability

Each of the test specimens was subjected to a welding test for investigating consecutive spot weldability by using a DR-type Cr-Cu electrode under the conditions of a welding force of 150 kgf, an energizing time of 10 cycles/60 Hz, and a welding current of 7.5 kA, and the weldability was evaluated on the basis of the consecutive spot number. The evaluation criteria are as follows.

<Evaluation criteria>

    o (practicable): 5000 spots or more
    × (poor): less than 5000 spots

The results obtained by using the methods described above are given in Table 2.

From the results given in Table 2, it was clarified that, according to the present invention, it is possible to obtain a steel sheet having excellent press formability. In addition, it is also possible to optionally obtain a steel sheet further having film removability and weldability which are at a practicable level.

Industrial Applicability

Since the steel sheet according to the present invention has excellent press formability, it is possible to use the steel sheet in a wide range of fields of industrial applications including applications in which particularly intense drawing is performed. In addition, since it is possible to optionally manufacture a steel sheet having excellent film removability and weldability, it is also possible to use such a steel sheet for automotive body applications.

Reference Signs List

1.  sample for measuring friction coefficient
2.  sample stage
3.  slide table
4.  roller
5.  slide table supporting base
6.  bead
7.  first load cell
8.  second load cell
9.  rail

**Claims**

1.  A steel sheet having an organic resin coating film which has an indentation reduced Young's modulus of 20 GPa or higher and 50 GPa or lower and an indentation hardness of 0.5 GPa or higher and 1.5 GPa or lower and which has a coating weight per side after drying of 0.2 g/m$^2$ or more and 2.0 g/m$^2$ or less on at least one surface thereof.

2.  A steel sheet having an organic resin coating film which has an indentation reduced Young's modulus of 10 GPa or higher and less than 20 GPa and an indentation hardness of 0.2 GPa or higher and 0.5 GPa or lower and which has a coating weight per side after drying of 0.2 g/m$^2$ or more and 2.0 g/m$^2$ or less on at least one surface thereof.

3.  The steel sheet according to Claim 1 or 2, wherein the organic resin coating film contains one, two, or more selected from an acrylic resin, a urethane resin, a phenol resin, an epoxy resin, and a mixture thereof.

4.  The steel sheet according to any one of Claims 1 to 3, wherein the organic resin coating film contains a wax in an amount of 50 mass% or less with respect to 100 mass% of resin constituents.

5.  The steel sheet according to Claim 4, wherein the wax is a hydrocarbon-based wax.

6.  The steel sheet according to Claim 4 or 5, wherein an average particle diameter of the wax is 0.01 um or more and 4 um or less.

7.  A method for manufacturing the steel sheet according to any one of Claims 1 to 6, the method comprising: applying, to the steel sheet, a solution which is prepared by dissolving or dispersing an organic resin in an aqueous solvent or a solution which is prepared by adding a wax to the organic resin, and drying the applied solution by heating to form a lubrication film having a coating weight per side after drying of 0.2 g/m$^2$ or more and 2.0 g/m$^2$ or less on the steel sheet.

# FIG. 1

# FIG. 2

## INTERNATIONAL SEARCH REPORT

| International application No. |
|---|
| **PCT/JP2023/002151** |

### A. CLASSIFICATION OF SUBJECT MATTER

***B32B 15/08***(2006.01)i; ***B05D 5/00***(2006.01)i; ***B05D 7/14***(2006.01)i; ***B05D 7/24***(2006.01)i; ***C09D 7/63***(2018.01)i;
***C09D 201/00***(2006.01)i; ***C23C 26/00***(2006.01)i
FI: B32B15/08 G; B05D5/00 Z; B05D7/14 J; B05D7/24 302E; C09D7/63; C09D201/00; C23C26/00 A

According to International Patent Classification (IPC) or to both national classification and IPC

### B. FIELDS SEARCHED

Minimum documentation searched (classification system followed by classification symbols)

B32B1/00-43/00; B05D1/00-7/26; C09D1/00-10/00; 101/00-201/10; C23C24/00-30/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2021-147657 A (JFE STEEL CORP) 27 September 2021 (2021-09-27)<br>claims 1, 3, paragraphs [0001], [0011], [0022]-[0045], [0054], [0058]-[0060] | 1-7 |
| A | JP 2017-105986 A (JFE STEEL CORP) 15 June 2017 (2017-06-15)<br>claims 1, 4-5, paragraphs [0001], [0008], [0013]-[0018], [0021]-[0026] | 1-7 |
| A | JP 2014-144604 A (NISSHIN STEEL CO LTD) 14 August 2014 (2014-08-14)<br>claims 1-2, paragraphs [0001], [0008], [0020]-[0056], fig. 1-3 | 1-7 |
| A | JP 2013-221177 A (NIPPON STEEL & SUMITOMO METAL CORP) 28 October 2013<br>(2013-10-28)<br>claims 1-2, paragraphs [0001], [0007], [0016]-[0043] | 1-7 |
| A | JP 2004-098316 A (NIPPON STEEL CORP) 02 April 2004 (2004-04-02)<br>claims 1-3, paragraphs [0001], [0010]-[0013] | 1-7 |
| A | JP 8-90710 A (KOBE STEEL LTD) 09 April 1996 (1996-04-09)<br>claim 1, paragraphs [0001], [0003], [0005]-[0008], [0014]-[0017], [0025]-[0050] | 1-7 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **04 April 2023** | **18 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/002151**

| Patent document cited in search report | | | Publication date (day/month/year) | Patent family member(s) | Publication date (day/month/year) |
|---|---|---|---|---|---|
| JP | 2021-147657 | A | 27 September 2021 | WO 2021/187253 A1<br>KR 10-2022-0129052 A<br>CN 115244218 A | |
| JP | 2017-105986 | A | 15 June 2017 | US 2018/0345317 A1<br>claims 6, 10, 12, paragraphs<br>[0001], [0012], [0017]-[0029],<br>[0034]-[0042], table 1<br>WO 2017/094893 A1<br>EP 3385344 A1<br>KR 10-2018-0080277 A<br>CN 108368375 A | |
| JP | 2014-144604 | A | 14 August 2014 | (Family: none) | |
| JP | 2013-221177 | A | 28 October 2013 | (Family: none) | |
| JP | 2004-098316 | A | 02 April 2004 | (Family: none) | |
| JP | 8-90710 | A | 09 April 1996 | (Family: none) | |

Form PCT/ISA/210 (patent family annex) (January 2015)

**EP 4 477 410 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9170059 A
- JP 2002307613 A
- JP 2000309747 A
- JP 2000167981 A